# EUROPEAN PATENT APPLICATION

(11) **EP 2 420 798 A1**
(43) Date of publication of application: **22.02.2012**
(21) Application number: 10764405.6
(22) Date of filing: 09.04.2010
(51) Int. Cl.: G01C 21/00, H04M 1/00, H04W 4/04

(54) **NAVIGATION DEVICE**

(30) Priority: 13.04.2009 JP 2009097294
(71) Applicant: Clarion Co., Ltd., Tokyo 112-8608 (JP)
(72) Inventor: MOMIYAMA, Eri, Saitama-shi Saitama 330-0081 (JP); MIYAZAKI, Masamitsu, Saitama-shi Saitama 330-0081 (JP); SHODA, Yuichi, Saitama-shi Saitama 330-0081 (JP)
(74) Representative: MERH-IP Matias Erny Reichl Hoffmann
(86) International application number: PCT/JP2010/056464
(87) International publication number: WO 2010/119821

(57) **Abstract**

A navigation device includes: a hands-free call unit that is connected to a mobile-phone handset and provides a hands-free call; an acquisition unit that acquires from the mobile-phone handset data related to a phone number stored in the mobile-phone handset; a display control unit that displays a screen based upon the data related to the phone number acquired by the acquisition unit; a storage unit in which the screen displayed by the display control unit when power is turned off is stored; and a redisplay control unit that calls and redisplays the screen stored in the storage unit when the power is turned on again after having been turned off.

## Description

### TECHNICAL FIELD

The present invention relates to a navigation device to which a mobile-phone handset is connected so as to enable a hands-free call.

### BACKGROUND ART

There are countries and regions that legally prohibit a driver of a vehicle from holding a mobile-phone handset to operate it or make a phone call while the vehicle is in motion. For this reason, hands-free call devices for mobile-phone handset and navigation devices including a hands-free call function are commercially available, and it is known that those products are mounted on vehicles after being devised so as to encourage the driver to concentrate on driving (refer to Patent Literature 1).

### CITATION LIST

### PATENT LITERATURE

[PATENT LITERATURE 1] Japanese Laid-Open Patent Publication No. H11-168549

### SUMMARY OF INVENTION

### TECHNICAL PROBLEM

However, in order for the driver not to concentrate on operating the navigation device and viewing the screen, most of commercially available vehicle-mounted navigation devices with a hands-free call function are configured to limit a part of user operations and display functions while the vehicle is in motion. For this reason, where the navigation device requires a number of operations or hierarchy levels in hierarchical display before the user executes desired processing such as confirmation of incoming and outgoing call history or the like, there is a problem that such upper limit value capping may cause the desired processing to be disabled.

### SOLUTION TO PROBLEM

According to the first aspect of the present invention, a navigation device comprises: a hands-free call unit that is connected to a mobile-phone handset and provides a hands-free call; an acquisition unit that acquires from the mobile-phone handset data related to a phone number stored in the mobile-phone handset; a display control unit that displays a screen based upon the data related to the phone number acquired by the acquisition unit; a storage unit in which the screen displayed by the display control unit when power is turned off is stored; and a redisplay control unit that calls and redisplays the screen stored in the storage unit when the power is turned on again after having been turned off.
According to the second aspect of the present invention, in the navigation device according to the first aspect, it is preferred that an incoming and outgoing call history related to a same phone number acquired by the acquisition unit includes only a latest one history with respect to each type of incoming answered calls, incoming missed calls, and outgoing calls.
According to the third aspect of the present invention, in the navigation device according to the first or the second aspect, it is preferred that the navigation device further comprises: a name input unit that inputs a name of the data related to the phone number; and a name record unit that records individual identifying information of the mobile-phone handset and the name having been input by the name input unit while being associated with each other.
According to the fourth aspect of the present invention, in the navigation device according to the third aspect, it is preferred that the navigation device further comprises: a search unit that searches data related to a phone number based upon the individual identifying information; and an update unit that updates the data related to the phone number having been searched by the search unit to the data related to the phone number having been acquired by the acquisition unit.
According to the fifth aspect of the present invention, in the navigation device according to the fourth aspect, it is preferred that when the acquisition unit newly acquires latest data of the data related to the phone number, the search unit searches, based upon the individual identifying information, for the data related to the phone number having been acquired in a past by the acquisition unit, and the update unit updates the data related to the phone number having been searched by the search unit to the latest data.

### ADVANTAGEOUS EFFECT OF THE INVENTION

According to the present invention, at the time of hands-free calling using the navigation device, the number of operations or the number of hierarchy levels in hierarchical display before the user executes desired processing can be reduced, thereby improving convenience.

### BRIEF DESCRIPTION OF THE DRAWINGS

[FIG 1] A diagram showing the structure of the inside of a vehicle-mounted navigation device and its periphery.
[FIG 2] A diagram showing the mechanism of management of phone number data stored in an auxiliary storage.
[FIG 3] An illustration showing a screen displaying incoming call history data of phone number data in the vehicle-mounted navigation device.
[FIG 4] An illustration showing an incoming and outgoing call integration history display screen integrally displaying in chronological order incoming call history data and outgoing call history data of phone number data in the vehicle-mounted navigation device.
[FIG 5] An illustration showing a missed call notification screen in the vehicle-mounted navigation device.
[FIG 6] A flowchart explaining a registration or update processing procedure of phone number data in the vehicle-mounted navigation device.
[FIG 7] A flowchart explaining a specific processing procedure to be carried out in "normal use", which is subroutine processing included in the registration or update processing procedure of phone number data in the vehicle-mounted navigation device.

### DESCRIPTION OF EMBODIMENTS

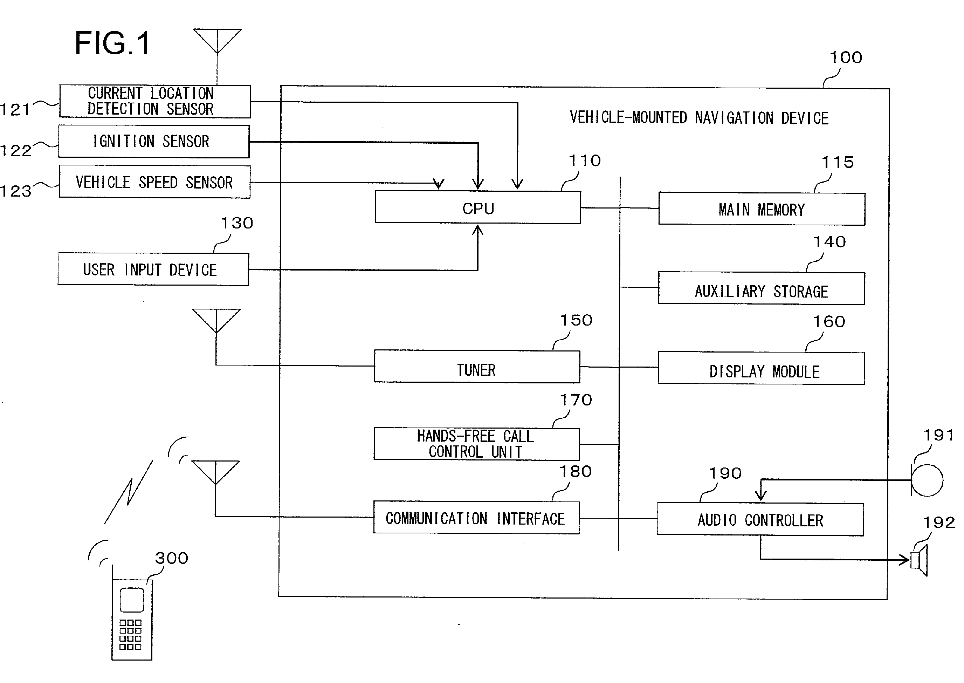

An embodiment in which the present invention, which enables the number of operations at the time of hands-free call to be reduced, is applied to a vehicle-mounted navigation device will now be explained with reference to FIG 1 to FIG 7. FIG 1 is diagram showing the structure of the inside of a vehicle-mounted navigation device 100 of the present embodiment and its periphery.

A CPU 110 is an arithmetic processing unit that controls the whole vehicle-mounted navigation device 100, and the CPU 110 and its peripheral circuits are connected with each other via a bus. Signals are input to the CPU 110 from a current location detection sensor 121, an ignition sensor 122, and a user input device 130. The peripheral circuits are configured to include a main memory 115, an auxiliary storage 140, a broadcasting tuner 150, a display module 160, a hands-free call control unit 170, a communication interface 180, and an audio module 190. The main memory 115 is used as a work memory which is a work area of the CPU 110 and as a program memory in which a control program is stored.

The current location detection sensor 121, being configured to include a GPS sensor, detects current location of a vehicle on which the vehicle-mounted navigation device 100 is mounted. The ignition sensor 122 detects ON/OFF of the ignition of the vehicle. A vehicle speed sensor 123 detects the vehicle speed of the vehicle. The user input device 130 is, for example, a touch screen, a push-button switch around the periphery of the screen, a remote controller, a joystick, or a stylus pen.

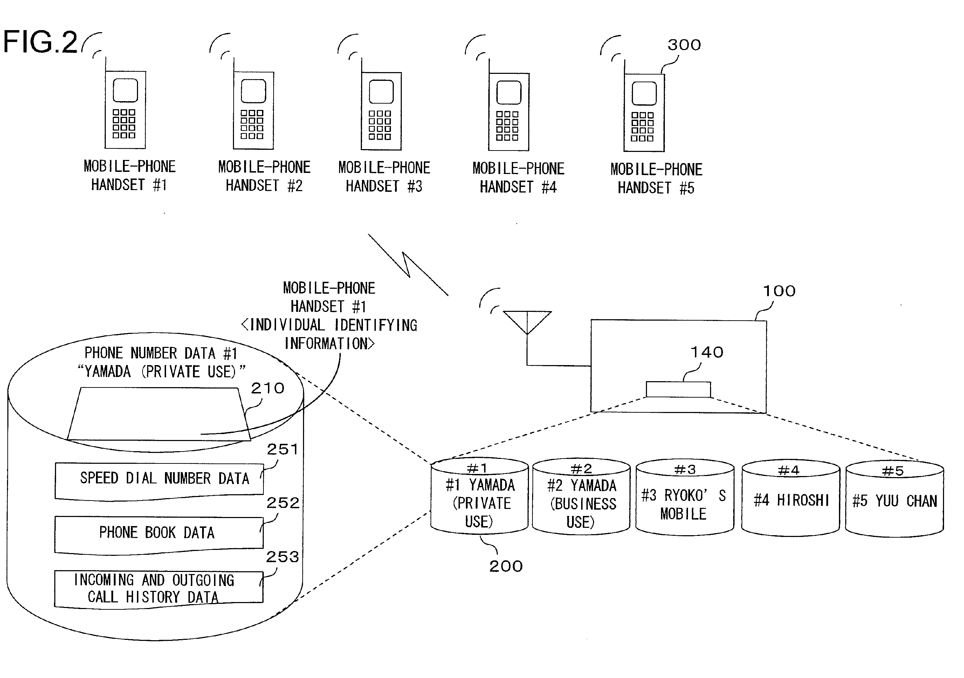

The auxiliary storage 140 stores therein road map data and POI (Point Of Interest, e.g., tourist spots and various facilities) information to be used for navigation processing. The auxiliary storage 140 also stores therein phone number data 200 (described later in the explanation of FIG 2). While the auxiliary storage 140 is, for instance, a hard disk drive, it may be a CD, a DVD, a flash memory, or another recording medium, and its readout device.

The tuner 150 is used to receive data from a road traffic information distribution center, e.g., VICS Center (Japanese Registered Trademark) of Japan, via an antenna.

The display module 160 displays on its screen image data constituted to include text and/or graphics output from the CPU 110.

The hands-free call control unit 170 controls an operation of a mobile-phone handset 300 and a hands-free call which is a call using the mobile-phone handset 300 performed via the vehicle-mounted navigation device 100.

The communication interface 180 is used to perform data communication between the vehicle-mounted navigation device 100 and the mobile-phone handset 300. The data communication method may be wireless communication such as Bluetooth (Japanese Registered Trademark) or infrared communication, or wired communication via cable connection. If Bluetooth is used, for example, the communication interface 180 is configured to include an RF (Radio Frequency) circuit for data transmission and reception (not shown in the figures).

The audio controller 190 performs control to convert voice that the user emitted to a microphone 191 into an audio signal and control to output an audio signal to a speaker 192.

Next, phone number data stored in the auxiliary storage 140 will be explained with reference to FIG 2. The phone number data 200, which is to be read and set or updated in the hands-free call according to the present embodiment, is managed by providing each piece of the phone number data of a plurality of registered mobile-phone handsets with a registration name. The registration name of the phone number data 200 is managed in association with the mobile-phone handset individual identifying information 210. As a registration name, for instance, a Bluetooth Device Name, which is defined by the Bluetooth standard, or any name (e.g., "Yamada (private use)") according to a user input is used. As the mobile-phone handset individual identifying information 210, for example, a Bluetooth Device Address, which is defined by the Bluetooth standard, or a phone number is used.

FIG 2 presents a situation where the phone number data 200 of five mobile-phone handsets are read in the vehicle-mounted navigation device 100 via wireless communication using Bluetooth, for instance, and managed in association with the mobile-phone handset individual identifying information 210 #1 to #5, respectively. The phone number data 200 include speed dial data 251, phone book data 252, and incoming and outgoing call history data 253, for example. In FIG 2, the registration name of the phone number data #1 associated with the mobile-phone handset #1 is "Yamada (private use)". The registration name of the phone number data #2 associated with the mobile-phone handset #2 is "Yamada (business use)". The registration name of the phone number data #3 associated with the mobile-phone handset #3 is "Ryoko's mobile". The registration name of the phone number data #4 associated with the mobile-phone handset #4 is "Hiroshi". The registration name of the phone number data #5 associated with the mobile-phone handset #5 is "Yuu chan".

The incoming and outgoing call history data 253 includes incoming call history data and outgoing call history data which are not shown in the figures. In incoming call history data stored in the mobile-phone handset itself, usually, whether or not each of the incoming calls has been answered is recorded. When the incoming call history data is read in the vehicle-mounted navigation device 100, as for incoming calls from the same phone number, the latest answer history and the latest missed call history are extracted and saved as incoming call history data. It is to be noted that a missed call refers to an unanswered incoming call. In addition, as for outgoing calls to the same phone number, only the latest outgoing call history is saved as outgoing call history data.

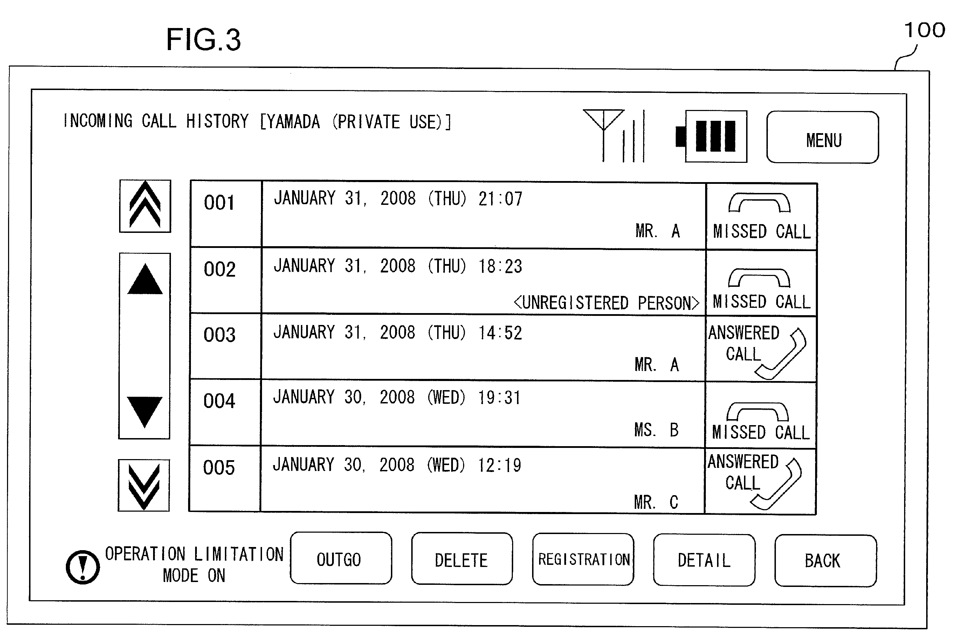

Next, a screen to be displayed in a hands-free call according to the present embodiment will be explained with reference to FIGS. 3 to 5. FIG 3 is an example of a screen on which incoming call history data of the phone number data #1 associated with the mobile-phone handset #1 in FIG 2 is displayed. In this example, the history of the latest five incoming calls is displayed. Each of the incoming calls is displayed with time and whether the call was answered or missed. As mentioned earlier, as for incoming calls from the same phone number, only the latest answer history and only the latest missed call history are saved in the incoming call history data. Accordingly, if there is one or more missed calls made prior to 31 January 2008 (Thu) 21:07 from a mobile-phone handset owned by a person corresponding to "Mr. A" which corresponds to the latest missed call history, any of the missed calls is not displayed. For example, even if five or more consecutive missed calls are made from the mobile-phone handset owned by a person corresponding to "Mr. A", only the missed call history from the same phone number is displayed on the latest incoming call history screen as shown in FIG 3. Thus, there is no need to perform an additional operation such as scrolling the screen for referring to an incoming call history from another phone number. However, an incoming call made at 14:52 of the same day from the mobile-phone handset owned by a person corresponding to the "Mr. A" was answered, and hence the fact that the incoming call was answered is displayed on the incoming call history screen.

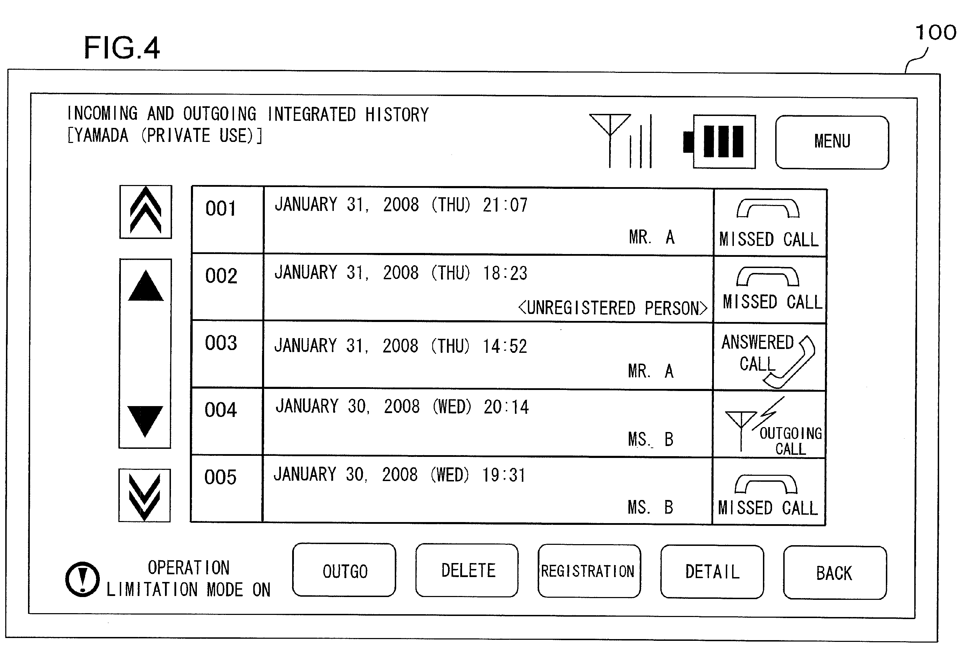

FIG 4 is an example of an incoming and outgoing call integration history display screen on which incoming call history data and outgoing call history data that constitute the incoming and outgoing call history data 253 of the phone number data #1 associated with the mobile-phone handset #1 in FIG 2 are integrally displayed in chronological order. Each of the incoming calls or the outgoing calls is displayed with time and whether the call was answered, missed, or outgoing. As mentioned earlier, as for incoming calls from the same phone number, only the latest answer history and only the latest missed call history are saved in the incoming call history data, and as for outgoing calls to the phone number, only the latest outgoing call history is saved as the outgoing call history data. Hence, even if there are a plurality of answered calls and a plurality of missed calls from the mobile-phone handset owned by a person corresponding to "Mr. A", histories other than the latest history of each of them are not displayed. The incoming call history from a mobile-phone handset owned by a person corresponding to "Ms. B" and the outgoing call history to the mobile-phone handset owned by a person corresponding to "Ms. B" are both displayed.

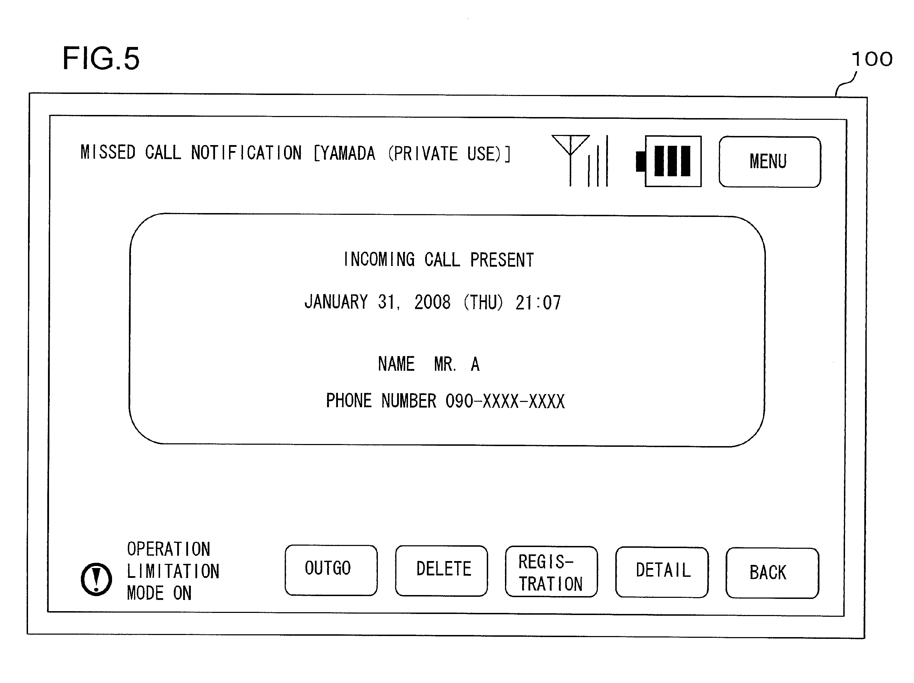

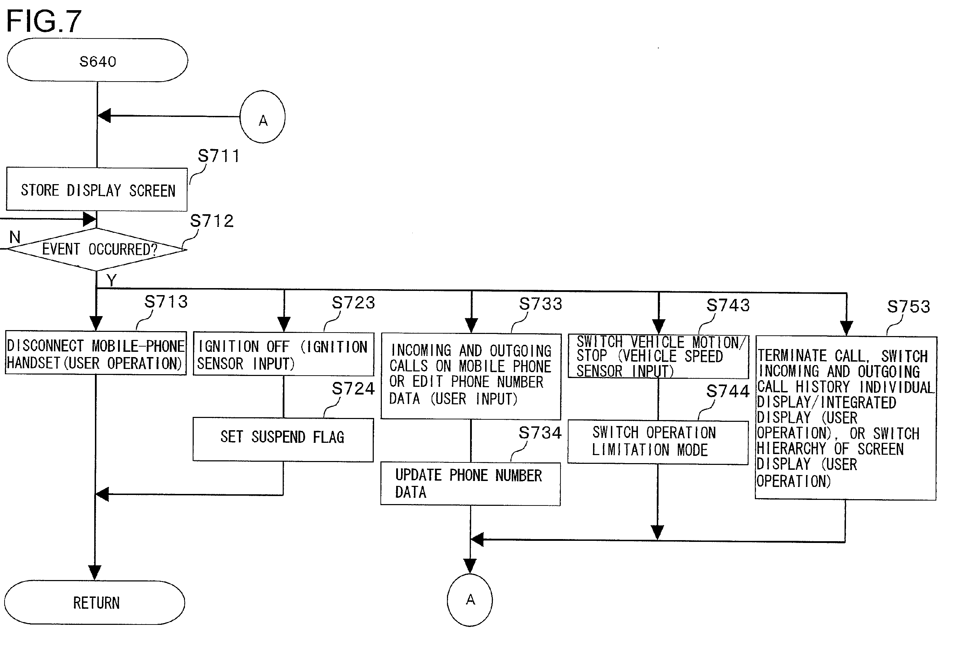

FIG 5 shows a missed call notification screen to be displayed when the user missed an incoming call. The missed call notification screen is displayed until a next event (for instance, an input operation by the user or a new incoming call) occurs. If the event is ignition OFF detected by the ignition sensor 122 and furthermore if the mobile-phone handset detected by the vehicle-mounted navigation device 100 after subsequent ignition ON is the same as the mobile-phone handset connected at the ignition OFF, the missed call notification screen is displayed again. The above operation associated with such ignition OFF and subsequent ignition ON, i.e., an operation of redisplay after ignition ON of a display screen at ignition OFF, is also performed for a screen other than the missed call notification screen. An example in which a screen other than the missed call notification screen, displayed immediately prior to ignition OFF event occurrence, is redisplayed will be presented in the explanation of FIG. 7 described later.

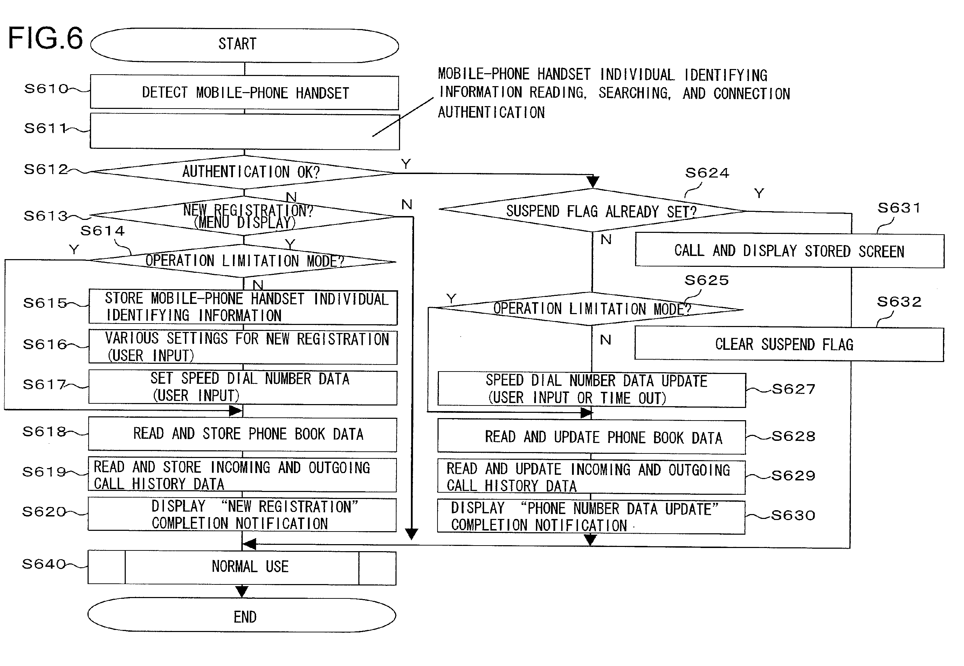

The registration or update processing procedure of the phone number data 200 controlled by the CPU 110, when the mobile-phone handset is connected to the vehicle-mounted navigation device 100, will be explained with reference to the flowchart of FIG. 6. In a step S610, the vehicle-mounted navigation device 100 detects a mobile-phone handset by the hands-free call control unit 170. In a step S611, the vehicle-mounted navigation device 100 reads individual identifying information of the mobile-phone handset, searches for the mobile-phone handset individual identifying information 210 acquired in the past that is stored in the auxiliary storage 140, and matches the read individual identifying information with the searched mobile-phone handset individual identifying information so as to enable connection authentication. As described earlier, the phone number data 200 is managed corresponding to the mobile-phone handset individual identifying information 210, and thus searching for the mobile-phone handset individual identifying information 210 is also searching for the phone number data 200.

When in a step S612, a negative decision is made on "authentication OK?", i.e., when a decision is made that the mobile-phone handset individual identifying information read by the vehicle-mounted navigation device 100 in the step S611 has not been registered, a menu as to whether or not to make a new registration is displayed on the screen in a step S613, and the vehicle-mounted navigation device 100 waits for an input by the user. If a new registration is made, in a step S614, a decision is made as to whether or not the CPU 110 is in operation limitation mode where a part of operations and display functions are limited while the vehicle is in motion. If a negative decision is made, the mobile-phone handset individual identifying information is stored in a step S615. After that, in a step S616, various settings for new registration are performed based upon a user input. The various settings for new registration include, for example, the place of a folder in which the phone number data 200 is stored in the auxiliary storage 140, the registration name of the phone number data 200 (but limited to a case where any name based upon a user input is used), and the phone number provided to the mobile-phone handset. Following that, in a step S617, speed dial number data is set based upon a user input, and in a step S618 and in a step S619, phone book data and incoming and outgoing call history data are read and acquired from the connected mobile-phone handset, so that they are stored in the auxiliary storage 140. Upon completion of those processing, in a step S620, a "new registration" completion notification message is displayed on the screen, and then the normal use such as calling the phone number data 200 and operating the mobile-phone handset is enabled. Since if a positive decision is made in the operation limitation mode decision processing in the step S614, processing requiring a user input operation is not performed, the flow of control proceeds to the step S618.

If in the step S612, a positive decision is made on "authentication OK?", the mobile-phone handset is connected, and in a step S624, a decision is made as to whether or not a suspend flag was set at the time of the last ignition OFF. This suspend flag setting is carried out in "normal use" subroutine processing, which will be described later in the explanation of FIG 7. If a negative decision is made in the step S624, a decision is made in a step S625 as to whether or not the vehicle-mounted navigation device 100 is in operation limitation mode. If a negative decision is made in the step S625, the speed dial number data is updated in a step S627 based upon a user input. At this time, it may be arranged that if a predetermined period of time has elapsed in a state where no user input exists, the processing times out and the flow of control proceeds to the next step. In a step S628 and a step S629, the latest phone book data and incoming and outgoing call history data are read and acquired from the connected mobile-phone handset. The phone number data 200 acquired in the past and stored in the auxiliary storage 140, which was searched in the step S611, is updated with the acquired latest phone book data and the incoming and outgoing call history data. Upon completion of those processing, in a step S630, a "phone number data update" completion notification message is displayed on the screen. If a positive decision is made on the operation limitation mode decision processing in the step S625, necessary processing based upon a user input operation is not performed, and thus the flow of control proceeds to the step S628.

If a positive decision is made in the step S624, in a step S631 a screen having been already stored by display screen storage processing described later in the explanation of FIG 7 is called and displayed, and in a step S632 a suspend flag is cleared.

After any of the completion of processing in the step S620, the negative decision making in the step S613, the completion of processing in the step S630, and the completion of processing in the step S632, the flow of control proceeds to a step S640. In the step S640, the flow of control proceeds to subroutine processing "normal use" described later in the explanation of FIG. 7. Upon completion of the subroutine processing, the processing procedure of the phone number data 200 with the mobile-phone handset being connected to the vehicle-mounted navigation device 100 is terminated.

Next, a specific processing procedure carried out in subroutine processing "normal use" stated as the step S640 in FIG 6 will be explained with reference to the flowchart of FIG 7. Once the present subroutine processing "normal use" is started, in a step S711 the CPU 110 stores data of a display screen that is displayed at the time into the main memory 115 or a cache memory not shown in the figures, and then waits for any event to occur.

In a step S712, if a decision is made that an event has occurred in the CPU 110, a decision is made as to the content of the event (step S713, S723, S733, S743, or S753) and processing is performed according to the content. If the event occurred in the step S712 is a mobile-phone handset disconnection event by a user operation of the step S713, the present subroutine processing "normal use" is terminated. If the event occurred in the step S712 is an ignition OFF event of the step S723 (based upon the input from the ignition sensor 122), a suspend flag is set in a step S724 and the present subroutine processing "normal use" is terminated. A suspend flag at the time of ignition OFF is set, and then the ignition becomes ON. If the fact that the mobile-phone handset has been connected is detected upon the connection authentication by reading individual identifying information (FIG 6, the step S611 to the step S612 "Y"), the suspend flag having been set is detected (FIG 6, the step S624 "Y"). When the suspend flag is detected, a screen that was stored in the step S711 of FIG. 7 immediately prior to the ignition OFF is called and displayed (FIG 6, the step S631).

If the event occurred in the step S712 of FIG 7 is a mobile-phone incoming and outgoing call event of the step S733 or a phone number data edition event by a user input, the phone number data 200 is updated in a subsequent step S734. If the event occurred in the step S712 is a vehicle motion/stop switch event based upon an input from the vehicle speed sensor 123 of the step S743, operation limitation mode on/off switch is performed in a subsequent step S744. This description defines the operation limitation mode as a mode in which a part of operations and display functions are limited while the vehicle is in motion in order for the driver not to concentrate on operating the vehicle-mounted navigation device and viewing the screen. If the event occurred in the step S712 is a call termination event, an incoming and outgoing call history individual display/integrated display switch event by a user operation, or a hierarchy switch event of the screen display in the step S753, a screen is displayed corresponding to each event.

After any of the completion of the processing in the step S734, the completion of the processing in the step S744, and the completion of the processing in the step S753, the flow of control returns to the step S711 and the display screen is stored. For example, if the event occurred in the step S711 is an incoming call event to the mobile-phone handset of the step S733 and if the user answered it, the flow of control returns to the step S711 and the data of the display screen during the call is stored in the main memory 115 or the cache memory not shown in the figures. If the user missed the call and the incoming call event is terminated, a missed call notification screen is displayed as shown in FIG 5 and the data of the screen is stored in the main memory 115 or the cache memory not shown in the figures. The process flow in and after the step S712 is repeated as explained earlier. For instance, if the user answers the incoming call event, a call is initiated, and upon termination of the call, the event occurring in the step S712 is a call termination event of the step S753. If the user missed the incoming call event and the incoming call event is terminated, the missed call notification screen shown in FIG 5 described earlier is displayed and the data of the screen is stored in the main memory 115 or the cache memory not shown in the figures. Following that, if the ignition OFF event of step S723 occurs as an occurring event in the step S712, a suspend flag is set in the step S724, and the subroutine processing "normal use" of the FIG 7 is terminated. After that, if the ignition is turned on and the connection of the mobile-phone handset is continued, the missed call notification screen shown in FIG 5 described earlier is called and displayed.

The vehicle-mounted navigation device 100 according to the embodiment described above achieves the following operations and advantageous effects. (1) It is arranged that the phone number data 200 to be stored in the vehicle-mounted navigation device 100 such as the speed dial number data 251, the phone book data 252, and the incoming and outgoing call history data 253 are managed for each mobile-phone handset and identified corresponding to the mobile-phone handset individual identifying information 210. Due to this, when the registered mobile-phone handset 300 is connected to the vehicle-mounted navigation device 100, the phone number data 200 corresponding to the mobile-phone handset is made available without requiring selection processing by a user operation, thereby reducing the number of operations by the user. It will never occur that the user edits another phone number data corresponding to another registered mobile-phone handset, thereby preventing unauthorized access to phone number data.

(2) It is arranged that the phone book data 252 and the incoming and outgoing call history data 253 are read from the mobile-phone handset 300, which has been connected to the vehicle-mounted navigation device 100 and authenticated, via data communication. Due to this, when the registered mobile-phone handset 300 is connected to the vehicle-mounted navigation device 100, the latest phone book data and incoming and outgoing call history data retained by the mobile-phone handset can be read.

(3) As for the incoming and outgoing call history data 253 stored in the vehicle-mounted navigation device 100, similarly to a common mobile-phone handset, incoming call history data and outgoing call history data are managed separately. However, it is arranged that, as a screen display type, an integrated display function via incoming and outgoing call history integrated display is provided in addition to individual display such as incoming call history display and outgoing call history display. Due to this, the user is allowed to confirm the latest incoming and outgoing call history at a glance, thereby reducing the number of operations necessary in switching an incoming call history display and an outgoing call history display.

(4) In the vehicle-mounted navigation device 100, a display screen immediately prior to the ignition being turned off in a state where the mobile-phone handset 300 is connected is stored corresponding to the mobile-phone handset individual identifying information 210. It is arranged that after that, when the ignition is turned on and connection of the mobile-phone handset is detected based upon the mobile-phone handset individual identifying information 210, the stored display screen immediately prior to the ignition OFF is redisplayed. Due to this, even in an engine shutoff for the idle reduction while the vehicle is stopped that is accompanied with frequent ignition OFF/ON switching when the vehicle travels in an urban area, for example, the number of operations necessary to redisplay the screen.

(5) As for the incoming and outgoing call history data 253, it is arranged to extract the latest answer history and the latest missed call history for incoming calls from the same phone number and save those histories and to extract the latest outgoing call history for an outgoing call to the same phone number and save that history. This reduces an amount of operation by the user scrolling the incoming and outgoing call history display screen, whereas display of a plurality of incoming and outgoing call histories related to the same phone number has conventionally required the user to operate scrolling so as to refer to the latest incoming and outgoing call history display related to another phone number. Hence, highly useful information display can be referred to with a small number of operations.

### ---Variations---

While FIG 1 and FIG 2 only present an example of a use ofBluetooth-based wireless communication for connection of the mobile-phone handset 300 to the vehicle-mounted navigation device 100, the connection may be via infrared wireless communication or via wired communication through a cable.

While in the explanation of FIG 2 described earlier, the incoming and outgoing call history data 253 includes incoming call history data and outgoing call history data not shown in the figures, it may include answer history data, missed call history data, and outgoing call history data depending upon the model of the mobile-phone handset 300 to be connected. When the vehicle-mounted navigation device 100 reads those answer history data, missed call history data, and outgoing call history data, as for incoming calls from the same phone number it may be arranged to extract the latest answer history and save the history as answer history data and extract the latest missed call history and save the history as missed call history data. In this case, it may be arranged that when the user refers to the incoming call history display screen or the incoming and outgoing call history integrated display screen, as for incoming call history from the same phone number, the vehicle-mounted navigation device 100 extracts the latest answer history and the latest missed call history from among the incoming and outgoing call history data 253 and integrally display those histories as an incoming call history on the screen. Alternatively, it may be arranged to generate an answer history display screen and a missed call history display screen so as to display each of those screens.

In the explanations of FIG 3 and FIG 4 described earlier, as for the incoming and outgoing call history data 253, when incoming and outgoing call history data is read from the mobile-phone handset, the latest answer history and the latest missed call history are extracted and saved as for incoming calls from the same phone number. However, it may be arranged that when the user refers to the incoming call history display screen or the incoming and outgoing call history integrated display screen, as for incoming calls from the same phone number, the vehicle-mounted navigation device 100 extracts the latest incoming call history from among the incoming and outgoing call history data 253 regardless of answered calls and missed calls and displays the latest incoming call history on the screen. At that time, it may be arranged to display on the screen whether the latest incoming call history was of an answered call or a missed call.

In the explanations of FIG 3 and FIG 4 described earlier, as for the incoming and outgoing call history data 253, when incoming and outgoing call history data is read from the mobile-phone handset, the latest answer history and the latest missed call history are extracted and saved as for incoming calls from the same phone number and the latest outgoing call history is extracted and saved as for outgoing calls to the same phone number. However, it may be arranged that when the user refers to the incoming and outgoing call history display screen after the vehicle-mounted navigation device 100 reads all data, the vehicle-mounted navigation device 100, from among the incoming and outgoing call history data 253, extracts the latest answer history and the latest missed call history as for incoming calls from the same phone number, extracts the latest outgoing call history as for outgoing calls to the same phone number, and displays the latest answer history and the latest outgoing call history on the screen respectively. Alternatively, it may be arranged to display all the data on the screen without performing the extraction processing.

In the explanation of FIG 6 described earlier, the user is not allowed to select whether or not to read and set or update the speed dial number data 251, the phone book data 252, and the incoming and outgoing call history data 253. However, for instance, it is possible to arrange that phone book data can be prevented from undergoing overwrite processing that is not desired by the user. In other words, it may be arranged that the user is allowed to select whether or not to read and set or update each of the data.

In the explanation of FIG. 6 described earlier, reading and setting or updating the speed dial number data 251, the phone book data 252, and the incoming and outgoing call history data 253 cause data before undergoing overwrite processing to be lost. In such case, it is considered that restoration processing may be difficult or impossible if those data are overwritten by data including an unexpected error or data including false information, for example. Thus, it may be arranged to retire and save backup data of each of the last data when each of the data is read and set or updated. The backup data may be retired and saved in the auxiliary storage 140 or an externally connected storage device such as a removable disk.

In the explanation of FIG 7 described earlier, an ignition OFF event from the ignition sensor 122 is to be detected in the step S723. An ignition OFF event is detected by inputting signals from the ignition sensor 122 and a user input device 130 to the CPU 110. However, it may be arranged that an external device that detected the ignition OFF event, e.g., an engine control unit (ECU), notifies the CPU 110 of ignition OFF via inter-processor communication. At this time, the ECU may not immediately stop power supply to the vehicle-mounted navigation device 100 but stop power supply after a predetermined period of time has elapsed. Alternatively, it may be arranged that an ignition OFF stops power supply to the vehicle-mounted navigation device 100, thus leaving only auxiliary power supply to auxiliaries including the vehicle-mounted navigation device 100, so as to detect an ignition OFF event. In addition, it may be arranged that an ignition OFF signal is input directly from the ignition to the CPU 110 so as to detect an ignition OFF event.

The above explanation presents an example in which the plurality of mobile-phone handsets 300 are connected to the vehicle-mounted navigation device 100, and thus the mobile-phone handset individual identifying information 210 is used. However, if only one mobile-phone handset 300 is to be connected, the mobile-phone handset individual identifying information 210 may not be used.

While the above explanation presents an embodiment in which the present invention, which can achieve reduction in the number of operations at a hands-free call, is applied to a vehicle-mounted navigation device, it may be applied to a non-vehicle-mounted navigation device. For example, it may be applied to a PND (Personal Navigation Device) as long as an input signal from the ignition sensor 122 can be detected.

The embodiment and the variations described above may be combined.

In addition, the present invention may be embodied in any way other than those described in reference to the embodiment and the variations, as long as the functions characterizing the present invention remain intact.

The disclosure of the following priority application is herein incorporated by reference:
Japanese Patent Application No. 2009-97294 (filed on April 13, 2009)

## Claims

1. A navigation device, comprising:
a hands-free call unit that is connected to a mobile-phone handset and provides a hands-free call;
an acquisition unit that acquires from the mobile-phone handset data related to a phone number stored in the mobile-phone handset;
a display control unit that displays a screen based upon the data related to the phone number acquired by the acquisition unit;
a storage unit in which the screen displayed by the display control unit when power is turned off is stored; and
a redisplay control unit that calls and redisplays the screen stored in the storage unit when the power is turned on again after having been turned off.

2. A navigation device according to claim 1, wherein:
an incoming and outgoing call history related to a same phone number acquired by the acquisition unit includes only a latest one history with respect to each type of incoming answered calls, incoming missed calls, and outgoing calls.

3. A navigation device according to claim 1 or 2, further comprising:
a name input unit that inputs a name of the data related to the phone number; and
a name record unit that records individual identifying information of the mobile-phone handset and the name having been input by the name input unit while being associated with each other.

4. A navigation device according to claim 3, further comprising:
a search unit that searches data related to a phone number based upon the individual identifying information; and
an update unit that updates the data related to the phone number having been searched by the search unit to the data related to the phone number having been acquired by the acquisition unit.

5. A navigation device according to claim 4, wherein:
when the acquisition unit newly acquires latest data of the data related to the phone number, the search unit searches, based upon the individual identifying information, for the data related to the phone number having been acquired in a past by the acquisition unit, and the update unit updates the data related to the phone number having been searched by the search unit to the latest data.

## Amended claims

### Amended claims under Art. 19.1 PCT

**1.** A navigation device, comprising:
a hands-free call unit that is connected to a mobile-phone handset and provides a hands-free call;
an acquisition unit that acquires from the mobile-phone handset data related to a phone number stored in the mobile-phone handset;
a display control unit that displays a screen based upon the data related to the phone number acquired by the acquisition unit;
a storage unit in which the screen displayed by the display control unit when power is turned off is stored; and
a redisplay control unit that calls and redisplays the screen stored in the storage unit when the power is turned on again after having been turned off.

**2.** A navigation device according to claim 1, wherein:
an incoming and outgoing call history related to a same phone number acquired by the acquisition unit includes only a latest one history with respect to each type of incoming answered calls, incoming missed calls, and outgoing calls.

**3.** (Amended) A navigation device according to claim 1, further comprising:
a name input unit that inputs a name of the data related to the phone number; and
a name record unit that records individual identifying information of the mobile-phone handset and the name having been input by the name input unit while being associated with each other.

**4.** A navigation device according to claim 3, further comprising:
a search unit that searches data related to a phone number based upon the individual identifying information; and
an update unit that updates the data related to the phone number having been searched by the search unit to the data related to the phone number having been acquired by the acquisition unit.

**5.** A navigation device according to claim 4, wherein:
when the acquisition unit newly acquires latest data of the data related to the phone number, the search unit searches, based upon the individual identifying information, for the data related to the phone number having been acquired in a past by the acquisition unit, and the update unit updates the data related to the phone number having been searched by the search unit to the latest data.

Statement under Art. 19.1 PCT
Whereas the current claim 3 is dependent from the current claim 1 or 2, the amended claim 3 is dependent only from the current claim 1.

This amendment is related to a restriction of the current claim 3 and no new matter is added.
